# EUROPÄISCHE PATENTSCHRIFT

(11) **EP 1 051 924 B1**
(45) Veröffentlichungstag und Bekanntmachung des Hinweises auf die Patenterteilung: **26.09.2012**
(21) Anmeldenummer: 99109546.4
(22) Anmeldetag: 12.05.1999
(51) Int. Cl.: A41H 1/02, H04N 7/18

(54) **Verfahren und Vorrichtung zur Bestimmung von Körpermassen und/oder entsprechender Kleidergrösse einer Person**
Method and device for determining the body dimensions and/or the corresponding clothing size of a person
Procédé et appareil pour déterminer les dimensions corporelles et/ou la mesure correspondante du vêtement d'une personne

(43) Veröffentlichungstag der Anmeldung: 15.11.2000
(73) Patentinhaber: Human Solutions GmbH, 67657 Kaiserslautern (DE)
(72) Erfinder: Seidl, Andreas, D-67685 Weilerbach (DE); Stöhr, Michael, D-67731 Otterbach (DE); Trieb, Rainer, D-67685 Weilerbach (DE)
(74) Vertreter: Wagner, Karl H.

(56) Entgegenhaltungen:
- EP-A- 0 554 647
- DE-A- 19 620 144
- US-A- 5 163 006

## Beschreibung

Die vorliegende Erfindung bezieht sich auf ein Verfahren und ein Vorrichtung zur Bestimmung von Körpermaßen und/oder entsprechender Kleidergrößen einer Person.

Bei der Anfertigung von Maßbekleidung sind Fachleute verhältnismäßig lange mit der Aufnahme der Körpermaße (z. B. Bundweite, Oberweite, Schrittlänge, etc.) beschäftigt. Auch sind selbst sorgfältige Messungen beträchtlichen Streuungen unterworfen.

Ferner ergeben sich große Fehler beim Abschätzen einer Bekleidungsgröße beim Einkleiden von Personen, beispielsweise bei Soldaten und anderen Uniformträgern, die eingekleidet werden. Eine frühzeitige und genaue Abschätzung der erforderlichen oder bestpassenden Kleidergröße, beispielsweise schon bei der Musterung, könnte zu enormen Ersparnissen bei der Vorhaltung von Kleidungsstücken oder Uniformteilen führen.

Die Erfindung hat sich die Aufgabe gestellt, Maßkleidung kostengünstiger zur Verfügung zu stellen. Ferner soll eine genaue und reproduzierbare Zuordnung eines Kleidungsstücks zu einer Person ermöglicht werden.

Im folgenden wird der einschlägige Stand der Technik umrissen und die Nachteile kurz zusammengefasst:

Das im US-Patent Nr. 5 163 006 beschriebene System verwendet eine Videokamera zur Aufnahme einer Person aus mehreren Ansichten, die mit einem vorab ausgewählten körpernahen Bekleidungsstück in einer vorab ausgewählten Bekleidungsgröße während des Aufnahmevorgangs bekleidet ist. Die Bilder werden gespeichert und vom Benutzer interaktiv bearbeitet, wobei die Körperumrisse interaktiv markiert und gespeichert werden müssen, vorgegebene Bezugspunkte für jede Ansicht interaktiv für die Bestimmung von Umfangsmaßen markiert werden müssen, um daraus die Umfangsmaße zu berechnen. Diese Daten bilden die Grundlage für die Anpassung des Schnittbildes entsprechend den Körpermaßen der aufgenommenen Person und in Bezug auf die während der Aufnahme getragene Bekleidungsgröße. Das System erlaubt jedoch ausschließlich die Anwendung für körpernahe Bekleidungsstükke.

Der grundlegende Nachteil des in der US-A-5 163 006 beschriebenen Systems besteht darin, dass alle notwendigen Körperdaten vollständig interaktiv bestimmt werden müssen und somit erhebliches Fachwissen beim Benutzer vorhanden sein muss, um vergleichbare und reproduzierbare Ergebnisse zu erlangen. Ferner beziehen sich die Ergebnisse ausschließlich auf die Bekleidungsgröße, das von der vermessenen Person zum Zeitpunkt der Aufnahme getragen wurde, so dass keine Übertragbarkeit auf andere Bekleidungsstücke möglich ist. Das Verfahren liefert schließlich nicht eine passende Bekleidungsgröße aus einem vorhandenen Bekleidungsgrößensortiment.

Weiterhin sei auf die DE-A-196 20 144 verwiesen. Das in der Patentschrift beschriebene Verfahren zielt wie das zitierte US-Patent auf die Auswertung von Körperdaten für die Maßfertigung von individueller Bekleidung. Bei dem Verfahren wird der Proband mit einer oder mehrerer Kamera von mehreren Seiten aufgenommen. Daraus werden die Längen- und Umfangsmaße des Probanden, unter Verwendung einer Personentypologie, errechnet. Zur Ermittlung der notwendigen Daten für die individuelle Fertigung eines Bekleidungsstückes wird die Projektion mit Referenzgrößen aus einer Datenbank überblendet, verglichen und die Differenzen gemessen, wobei beide gegenüber verschoben werden und die aktuelle Darstellung oder die entsprechende Referenzgröße gestreckt oder komprimiert wird und so die Modellierung der Schnittkonstruktion gewonnen wird.

Nachteil des Verfahrens ist, dass für die Berechnung von Körpermaßen eine Personentypologie vorausgesetzt wird und vorhanden sein muss, wobei ferner Referenzgrößen in einer Datenbank hinterlegt sein müssen und der Ablauf nicht automatisch abläuft. Ferner liefert das Verfahren keine passende Bekleidungsgröße aus einem vorgegebenen Bekleidungsgrößensortiment.

Weitere Vorteile, Ziele und Merkmale der Erfindung werden deutlich aus der folgenden Beschreibung bevorzugter Ausführungsbeispiele anhand der Zeichnungen; in der Zeichnung zeigt:
- Figur 1: eine schematische Darstellung der Vorrichtung gemäß der vorliegenden Erfindung;

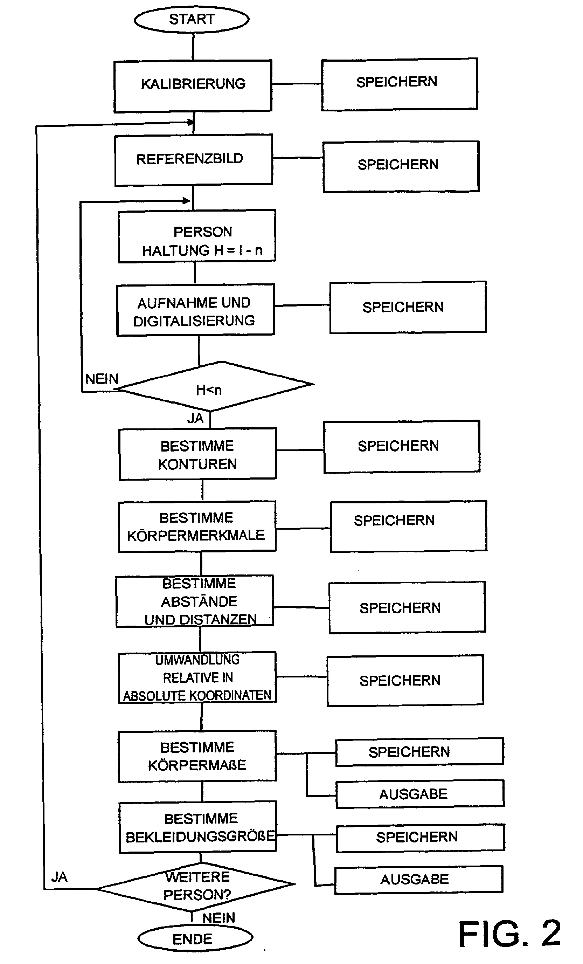

- Figur 2: ein Flußdiagramm zur Darstellung des Verfahrens gemäß der vorliegenden Erfindung.

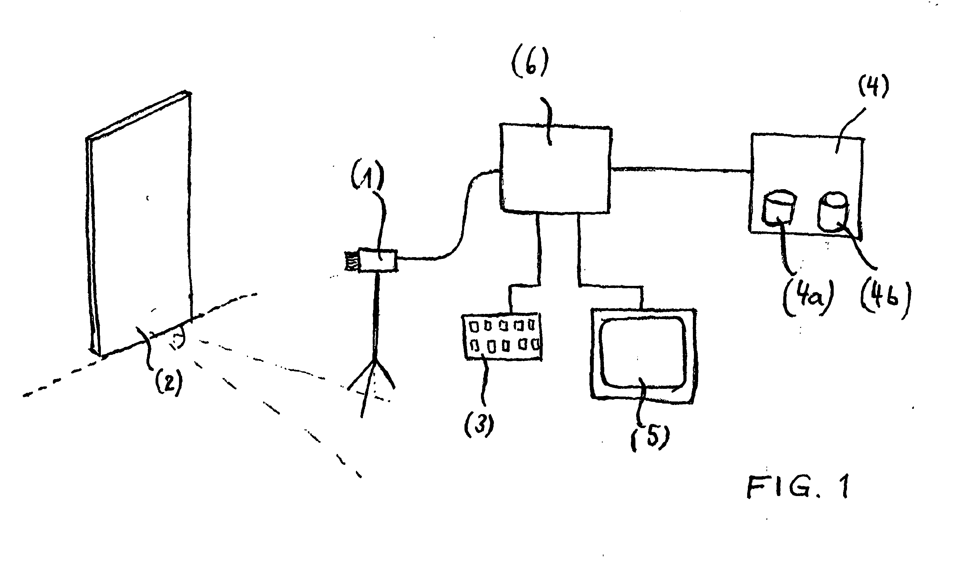

In Figur 1 bezeichnet das Bezugszeichen 1 eine Kamera, vorzugsweise eine CCD-Kamera, wobei sich ein Meßraum im Sichtfeld der Kamera 1 befindet. Es können auch mehrere Kameras vorgesehen sein, die im wesentlichen in gleicher Richtung ausgerichtet und vorzugsweise übereinander angeordnet sind.

Im Meßraum befindet sich eine virtuelle Referenzebene. Zur Kalibrierung von Kamera und Meßraum wird ein Kalibrierkörper 2, der vorzugsweise eine in der Referenzebene befindliche Kalibrierfläche aufweist, positioniert. Die Kamera 1 ist vorzugsweise mit einem Computer 6 verbunden, der Speichermittel 4 aufweist. Ein Bild des Kalibrierkörpers 2 wird durch die Kamera 1 aufgenommen und in den Speichermitteln 4 des Computers 6 gespeichert. Daraufhin wird der Kalibrierkörper 2 aus dem Meßraum entfernt und eine zu vermessende Person wird im Meßraum in der Referenzebene angeordnet. Von der Person werden in verschiedenen Haltungen und/oder Ansichten Aufnahmen gemacht, die zur weiteren Verwendung gespeichert werden. Die Aufnahmen werden vorzugsweise digitalisiert. Der Computer 6 bestimmt aus diesen Bilddaten die jeweilige Kontur der Person. Aus der Kontur der Person werden Körpermerkmale bestimmt, z.B. die relativen Stellen von Bauch, Brust, Schulter, Ellenbogen, Hals, Knie, etc. Aus den einzelnen Konturen werden anhand der gewonnenen Erkenntnisse über die Körpermerkmale Abstände und Distanzen abgeleitet oder ermittelt. Aus diesen Abständen und Distanzen können durch verschiedene Methoden Körpermaße, also Längen und Umfänge berechnet werden. Dazu können vorzugsweise auch Tabellen verwendet werden. Durch Kalibrierung können die relativen Maße in absolute Maße übertragen werden. Dazu werden die anfangs gewonnen Kalibrierdaten des Kalibrierkörpers verwendet.

Die sich hieraus ergebenden Maße sind die gewünschten Körpermaße der Person. Vorzugsweise werden die errechneten Körpermaße mit Bekleidungsgrößentabellen verglichen und durch geeignete Algorithmen werden hieraus Kleidergrößen bestimmt. Zusätzlich zu den Kleidergrößen können auch Differenzmaße angegeben werden, und zwar vorzugsweise in absoluten Maßen.

Anders ausgedrückt wird eine technische Vorrichtung und ein Verfahren zur automatischen oder interaktiven (berührungslosen) anthropometrischen Vermessung und Ermittlung von relevanten Körpermaßen für die Maßfertigung individueller Bekleidung oder die Auswahl von bestpassenden Bekleidungsgrößen auf Basis vorgegebener Bekleidungstabellen vorgesehen, wobei eine oder mehrere CCD-Kameras zur mehrfachen Aufnahme, vorzugsweise aus einer Richtung, der menschlichen Körperoberfläche aus verschiedenen Ansichten oder Haltungen verwendet wird, wobei vorzugsweise der Hintergrund oder die Person ausreichend beleuchtet ist, wobei der Ort und die Ausrichtung der Kamera insoweit beliebig gewählt werden kann, daß sich die zu vermessende Person vollständig im Kamerasichtfeld befindet und durch ein geeignetes Kalibrierverfahren und Kalibrationsobjekt auch nicht zur Meßebene orthogonale Projektionsrichtungen der Kamera möglich sind, wobei mittels Eingabevorrichtungen individuelle Daten (z.B. Stammdaten) des Kunden eingegeben und auf der Speichereinrichtung abgelegt werden können, wobei eine Speichereinrichtung zur Aufzeichnung der Bilddaten und ggf. relevanten Kundendaten und Körpermaße verwendet wird, wobei mittels Vorrichtungen zur multimedialen Präsentation die individuellen Kunden- und Bilddaten dargestellt und ggf. die Körpermaßbestimmung interaktiv kontrolliert werden kann, wobei ein koordinierender Prozessor aus der gespeicherten Aufnahmesequenz der Bilddaten der vermessenen Person die für die Anwendung relevanten Körpermaße und Haltungsdaten interaktiv oder automatisch berechnet, und wobei auf der Speichereinrichtung Größentabellen hinterlegt sind und damit auf der Basis der gemessenen Körpermaße automatisch die passenden Bekleidungsgrößen ausgewählt werden können (Klassifikation). Vorzugsweise kann das beschriebene System zusätzlich eine Vorrichtung zur skalierbaren Darstellung und Ausgabe der Kundendaten bzw. der ausgewählten Produktdaten (z.B. Drucker, Kundenkarte) enthalten. Darüber hinaus können die gespeicherten Kundendaten und Körpermaße mit Hilfe statistischer Methoden z.B. für die Lagerverwaltung und Auftragserteilung weiter verwendet werden.

Nachfolgend wird nochmals die Erhebung der Daten für das System im einzelnen beschrieben. Wenn der Kalibrierkörper sich in der Referenzebene im Meßraum befindet, wird durch die Kamera ein Bild gemacht und die entsprechenden Bilddaten werden im Computer in einem Speicher für die kalibrierte Meßebene abgespeichert. Daraufhin wird der Kalibrierkörper aus dem Meßraum entfernt.

Kurz bevor die Person in den Meßraum eintritt, wird ein Referenzbild gemacht, um den Hintergrund und die Beleuchtungsverhältnisse festzustellen. Das Referenzbild wird in einen Speicher für Referenzbilddaten, vorzugsweise im Computer abgespeichert.

Daraufhin wird die Person in der Refernzebene des Meßraumes in verschiedenen Haltungen und/oder Positionen angeordnet und es wird jeweils eine Aufnahme durch die Kamera gemacht und abgespeichert. Darüber hinaus können weitere Angaben zu der zu vermessenden Person über eine Eingabevorrichtung 3 (Fig. 1), beispielsweise ein Tastatur in den Computer eingegeben werden. Nachdem die Aufnahmen von der Person gemacht wurden, kann die Person den Meßraum wieder verlassen und es erfolgt eine Verarbeitung der Daten im Computer.

Zunächst erfolgt eine Ermittlung der Konturinformation der Person durch Verrechnung der Bilddaten aus den verschiedenen Aufnähmen mit den Referenzbilddaten, so daß nur die Konturdaten übrigbleiben. Der Hintergrund des Bildes sowie die übrigen Daten der Person mit Ausnahme der Konturdaten werden nicht weiter benötigt und können gelöscht werden. Die so erhaltenen Konturdaten werden in einem Konturdatenspeicher gespeichert, und zwar in Bildkoordinaten. Bei Verwendung einer CCD-Kamera sind diese Bildkoordinaten entsprechende Pixel auf der CCD-Vorrichtung.

Vorzugsweise an dieser Stelle des Vorgangs werden die relativen Konturdaten in absolute Koordinaten (auch als Welt-Koordinaten bezeichnet) und/oder Einheiten übertragen, indem die Konturdaten mit den anfangs gewonnen Kalibrierdaten verrechnet werden, so daß aus den relativen Konturdaten (in Pixeln) absolute Daten (beispielsweise in mm) für die Konturen erhalten werden. Es sei jedoch bemerkt, daß die Übertragung in absolute Daten auch zu einem späteren Zeitpunkt erfolgen kann.

Anschließend erfolgt eine Feststellung von charakteristischen Körpermerkmalen anhand der Kontur. Diese charakteristischen Körpermerkmale sind unter anderem auch die Grundlage der Konfektionsgrößen, beispielsweise Taille, Brust, Schulter, Gesäß etc. Wenn die Körpermerkmale festgestellt sind, was beispielsweise durch Gradientenhistogramme der Konturen erfolgen kann, erfolgt eine Bestimmung von Distanzmaßen an unterschiedlichen Positionen der Körpermerkmale. Die erwähnten unterschiedlichen Positionen entsprechen den Stellen, an denen ein Schneider an der Person Maß nehmen würde, um die Körpermaße zu erhalten. Die Distanzmaße der Konturen werden anschließen in tatsächliche Körpermaße umgerechnet (beispielsweise Bauchumfang, Oberweite, Schrittlänge etc.).

Nachdem die Körpermaße auf diese Weise in absoluten Maßen erhalten wurden, können daraus, beispielsweise unter Verwendung von empirischen Referenztabellen und geeigneten Algorithmen die bestpassenden Bekleidungsgrößen ermittelt werden, wobei ein weiterer Vorteil der Erfindung darin liegt, daß auch Abweichungen von Normmaßen in absoluten Maßen angegeben werden können, beispielsweise Schrittlänge = Normmaß + 3 cm.

Auf einer Anzeigevorrichtung 5, vorzugsweise einem mit dem Computer 6 verbundenen Bildschirm, kann unter anderem Folgendes angezeigt werden: alle durch die Kamera 1 aufgenommenen Bilder, die Körperkonturen, die Lage und der Betrag der Abstände und Distanzen, die errechneten Körpermaße, die Konfektionsgrößen, etc.

## Patentansprüche

1. Vorrichtung zur automatischen Bestimmung von Körpermaßen einer in einem Meßraum befindlichen Person, wobei folgendes vorgesehen ist:
a) eine Kamera (1) zur Aufnahme von verschiedenen Bildern der menschlichen Körperoberfläche in verschiedenen Ansichten und/oder Haltungen;
b) einen mit der Kamera (1) verbindbaren digitalen Bildspeicher (4) zur Speicherung von Personenbilddaten der aufgenommenen Personenbilder;
c) einen mit der Kamera verbindbaren Kalibrierdatenspeicher zur Speicherung der von der Kamera gelieferten Kalibrierbilddaten eines anstelle eines Menschen im Meßraum angeordneten Kalibrierkörpers;
d) einen Computer (6) zur automatischen Verarbeitung der Bilddaten zur Bestimmung der Körpermaße,
wobei der Computer (6) folgendes aufweist:
aa) Mittel zur Berechnung und Speicherung von Körperkonturdaten der jeweiligen Körperkonturen für die verschiedenen Personenbilder aus den im Bildspeicher (4) gespeicherten Personenbilddaten;
bb) Mittel zur Berechnung und Speicherung von Körpermerkmalsdaten der Körpermerkmale der Person aus den gespeicherten Körperkonturdaten;
cc) Mittel zur Berechnung und Speicherung von Distanzmaßen aus den gespeicherten Körperkonturdaten an unterschiedlichen Positionen der Körpermerkmale; und
dd) Mittel zur Bestimmung der Körpermaße in absoluten oder Welt-Koordinaten aus den Körperkonturdaten oder davon abgeleiteten Daten unter Verwendung der Kalibrierdaten im Kalibrierdatenspeicher und Speicherung der Körpermaße basierend auf den gespeicherten Distanzmaßen.

2. Vorrichtung gemäß Anspruch 1, **gekennzeichnet durch** Mittel zur automatischen Bestimmung von Kleidergrößen auf der Basis der Körpermaße.

3. Vorrichtung gemäß Anspruch 2, **dadurch gekennzeichnet, daß** die Mittel zur Bestimmung von Kleidergrößen eine Speichereinrichtung aufweisen, in der Bekleidungsgrößentabellen hinterlegt sind.

4. Vorrichtung gemäß einem der vorhergehenden Ansprüche, **gekennzeichnet durch** Mittel zur Anzeige der Körperkonturen und der Distanzmaße oder der Körpermaße.

5. Vorrichtung gemäß einem der vorhergehenden Ansprüche, **dadurch gekennzeichnet, daß** mehrere Kameras vorgesehen sind, die im wesentlichen in gleicher Richtung ausgerichtet und vorzugsweise übereinander angeordnet sind und mit dem Bildspeicher (4) verbunden sind.

6. Verfahren zur automatischen Bestimmung von Körpermaßen und/oder Kleidergrößen einer Person, wobei die folgenden Schritte vorgesehen sind:
a) Anordnen einer Kamera (1), so daß sich ein Meßraum im Sichtfeld der Kamera befindet;
b) Anordnen eines Kalibrierkörpers (2) im Meßraum;
c) Kalibrieren der Anordnung von Kamera (1) und Meßraum durch Erstellen einer Kameraaufnahme des Kalibrierkörpers (2) und Abspeichern der so gewonnenen Kalibrierdaten;
d) Erstellen eines Referenzbildes des leeren Meßraumes;
e) Einbringen einer Person in den Meßraum;
f) Positionieren der Person in einer ersten Haltung;
g) Aufnehmen und Speichern eines Bildes der Person in der ersten Haltung;
h) Positionieren der Person in einer weiteren Haltung;
i) Aufnehmen und Speichern eines Bildes der Person in der weiteren Haltung;
k) Wiederholen der Schritte h) und i), bis ausreichend Bilddaten vorhanden sind;
l) Automatisches Bestimmen der Kontur der Person in den aufgenommenen Bildern;
m) Automatisches Bestimmen von Abständen und Distanzen innerhalb der einzelnen Konturen;
n) Automatisches Umwandeln der relativen Angaben in absolute Maße unter Verwendung der in Schritt c) gewonnenen Kalibrierdaten;
o) Automatische Berechnung von Körpermaßen der Person aus den bestimmten Abständen und Distanzen, ggf. unter Verwendung von Tabellen;
p) Ausgabe der Ergebnisse; und
q) ggf. Wiederholung der Schritte e) bis p) für eine weitere Person.

7. Verfahren gemäß Anspruch 6, wobei das Verfahren anstatt des Schrittes q) oder der Schritte p) und q) die folgenden Schritte aufweist:
r) Automatisches Ermitteln und Abspeichern von Kleidergrößen der Person aus den Körpermaßen anhand von Tabellen und/oder Algorithmen;
s) Ausgabe der Ergebnisse; und
t) ggf. Wiederholen der Schritte e) bis q) bzw. e) bis s) für eine weitere Person.

8. Verfahren gemäß Anspruch 6 oder 7, **dadurch gekennzeichnet, daß** der Schritt n) vor dem Schritt m) durchgeführt wird.

9. Verfahren gemäß Anspruch 6 oder 7, **dadurch gekennzeichnet, daß** der Schritt n) erst nach dem Schritt o) durchgeführt wird.

## Claims

1. An apparatus for automatically determining body dimensions of a person being present in a measurement space, comprising:
a) a camera (1) for acquiring different images of the human body surface from different views and/or different positions;
b) a digital image storage (4) connectable to the camera (1) for storing image data of the person from the acquired images of the person;
c) a calibration data storage connectable to the camera for storing calibration data from a calibration body instead of data of a human body inside the measurement space provided by the camera;
d) a computer (6) for automatically processing the image data for determining the body dimensions, wherein the computer (6) further comprising:
aa) means for calculating and storing body contour data of respective body contours for the different images of the person from the image data of the person stored in the image storage (4);
bb) means for calculating and storing body attribute data of the persons body attributes from the stored body contour data;
cc) means for calculating and storing distance measures from the stored body contour data at different positions of the body attributes; and
dd) means for determining the body dimensions in absolute or world coordinates from the body contour data or data derived therefrom using calibration data from the calibration data storage and storing the body dimensions based on the stored distance measures.

2. The apparatus according to claim 1. **characterized in that** it comprises means for automatically determining clothing sizes based on the body dimensions.

3. The apparatus according to claim 2, **characterized in that** the means for determining clothing sizes comprising a storage unit in which clothing size tables are stored.

4. The apparatus according to any of the previous claims, **characterized in that** it comprises means for displaying the body contour data and the distance measures or the body dimensions.

5. The apparatus according to any of the previous claims, **characterized in that** it comprises a plurality of cameras substantially aligned in the same direction and preferably arranged on top of each other and wherein the cameras are connected with the image storage (4).

6. A method for automatically determining body dimensions and/or clothing sizes of a person, comprising the following method steps:
a) arranging a camera (1) such that a measurement space is in the field of view of the camera;
b) arranging a calibration body (2) within the measurement space;
c) calibrating the arrangement of the camera (1) and the measurement space by preparing a camera image of the calibration body (2) and storing the obtained calibration data;
d) generating a reference image of the empty measurement space;
e) placing a person into the measurement space.
f) positioning the person in a first position;
g) acquiring and storing an image of the person in the first position;
h) positioning the person in a further position;
i) acquiring and storing an image of the person in the further position;
k) repeating the steps h) and i) until sufficient image data is available;
I) automatically determining the contour of the person within the acquired images;
m) automatically determining separations and distances within the separate contours;
n) automatically converting of the relative measures into absolute measures using the calibration data obtained in step c);
o) automatically calculating body dimensions of the person from the determined separations and distances, if needed by using a table;
p) outputting the results; and
q) if needed, repeating the steps e) to p) for an additional person.

7. The method of claim 6, wherein the method comprising the following steps instead of step q) or the steps p) and q):
r) automatically determining and storing of clothing sizes of the person from the body dimensions using a table and/or algorithms;
s) outputting the results; and
t) if needed, repeating the steps e) to q) or q) to s) for an additional person.

8. The method of claim 6 or 7, **characterized in that** step n) is carried out prior to step m).

9. The method of claim 6 or 7, **characterized in that** step n) is carried out after step o).

## Revendications

1. Dispositif pour déterminer automatiquement des dimensions du corps d'une personne présente dans un espace de mesure, comprenant :
a) une caméra (1) pour acquérir différentes images de la surface du corps humain à partir de différentes vues et/ou différentes positions ;
b) un dispositif de stockage d'images numériques (4) connectable à la caméra (1) pour mémoriser des données d'images de la personne à partir des images acquises de la personne ;
c) un dispositif de stockage de données d'étalonnage connectable à la caméra pour mémoriser des données d'étalonnage provenant d'un corps d'étalonnage au lieu de données de corps humain dans l'espace de mesure assuré par la caméra ;
d) un ordinateur (6) pour traiter automatiquement les données d'images pour déterminer les dimensions du corps, l'ordinateur (6) comprenant en outre :
aa) des moyens pour calculer et mémoriser des données de contour corporel de contours corporels respectifs pour les différentes images de la personne à partir des données d'images de la personne mémorisées dans le dispositif de stockage d'images (4) ;
bb) des moyens pour calculer et mémoriser des données d'attributs de corps des attributs de corps de personnes à partir des données de contour corporel mémorisées ;
cc) des moyens pour calculer et mémoriser des mesures de distance à partir des données de contour corporel mémorisées à différentes positions des attributs de corps ; et
dd) des moyens pour déterminer les dimensions du corps en coordonnées absolues ou en coordonnées globales à partir des données de contour corporel ou de données dérivées de celles-ci en utilisant des données d'étalonnage provenant du dispositif de stockage de données d'étalonnage, et mémoriser les dimensions du corps sur la base des mesures de distance mémorisées.

2. Dispositif selon la revendication 1, **caractérisé en ce qu'**il comprend des moyens pour déterminer automatiquement des tailles de vêtement sur la base des dimensions du corps.

3. Dispositif selon la revendication 2, **caractérisé en ce que** les moyens pour déterminer des tailles de vêtement comprennent une unité de mémorisation dans laquelle des tables de taille de vêtement sont mémorisées.

4. Dispositif selon l'une quelconque des revendications précédentes, **caractérisé en ce qu'**il comprend des moyens pour afficher les données de contour corporel et les mesures de distance ou les dimensions du corps.

5. Dispositif selon l'une quelconque des revendications précédentes, **caractérisé en ce qu'**il comprend une pluralité de caméras sensiblement alignées dans la même direction et de préférence agencées l'une au-dessus de l'autre et dans lequel les caméras sont connectées au dispositif de stockage d'images (4).

6. Procédé pour déterminer automatiquement les dimensions du corps et/ou les tailles de vêtement d'une personne, comprenant les étapes de procédé suivantes :
a) agencer une caméra (1) de telle sorte que l'espace de mesure soit dans le champ de vision de la caméra ;
b) agencer un corps d'étalonnage (2) dans l'espace de mesure ;
c) étalonner l'agencement de la caméra (1) et l'espace de mesure en préparant une image de caméra du corps d'étalonnage (2) et en mémorisant les données d'étalonnage obtenues ;
d) générer une image de référence de l'espace de mesure vide ;
e) placer une personne dans l'espace de mesure ;
f) positionner la personne dans une première position ;
g) acquérir et mémoriser une image de la personne dans la première position ;
h) positionner la personne dans une autre position ;
i) acquérir et mémoriser une image de la personne dans l'autre position ;
k) répéter les étapes h) et i) jusqu'à disposer de suffisamment de données d'images ;
1) déterminer automatiquement le contour de la personne dans les images acquises ;
m) déterminer automatiquement des séparations et des distances dans les contours séparés ;
n) convertir automatiquement les mesures relatives en mesures absolues en utilisant les données d'étalonnage obtenues dans l'étape c) ;
o) calculer automatiquement les dimensions du corps de la personne à partir des séparations et des distances déterminées, si nécessaire en utilisant une table ;
p) fournir les résultats ; et
q) si nécessaire, répéter les étapes e) à p) pour une personne additionnelle.

7. Procédé selon la revendication 6, le procédé comprenant les étapes suivantes au lieu de l'étape q) ou des étapes p) et q) :
r) déterminer automatiquement et mémoriser les tailles de vêtement de la personne à partir des dimensions du corps en utilisant une table et/ou des algorithmes ;
s) fournir les résultats ; et
t) si nécessaire, répéter les étapes e) à q) ou q) à s) pour une personne additionnelle.

8. Procédé selon la revendication 6 ou 7, **caractérisé en ce que** l'étape n) est réalisée avant l'étape m).

9. Procédé selon la revendication 6 ou 7, **caractérisé en ce que** l'étape n) est réalisée après l'étape o).
